# EUROPEAN PATENT APPLICATION

(11) **EP 2 036 740 A1**
(43) Date of publication of application: **18.03.2009**
(21) Application number: 07788638.0
(22) Date of filing: 29.06.2007
(51) Int. Cl.: B44C 1/18, B44C 5/04

(54) **METHOD OF MANUFACTURING A COMPOSITE MULTILAYER MATERIAL FOR DECORATIVE OBJECTS AND MATERIAL OBTAINED USING SAID METHOD**

(30) Priority: 29.06.2006 ES 200601756
(71) Applicant: Martinez Segura, Domingo, 30850 Totana Murcia (ES)
(72) Inventor: Martinez Segura, Domingo, 30850 Totana Murcia (ES)
(74) Representative: Carvajal y Urquijo, Isabel
(86) International application number: PCT/ES2007/000391
(87) International publication number: WO 2008/000877

(57) **Abstract**

Procedure for manufacturing a multilayer composite material for decorative objects and multilayer composite material obtained by this procedure. The procedure comprises the following steps, namely, placing a first decorative sheet (1) of flexible material on a work surface, applying a first layer of adhesive material (2) on the facing surface of the first decorative sheet (1), placing a structural sheet (3) of malleable semirigid material on the first layer of adhesive material (2), applying a second layer of adhesive material (4) on the facing surface of the layer of moldable semirigid material (3), placing a second decorative sheet (5) of flexible material on the second layer of adhesive material (4) and exerting even pressure on the surface of the sheets for a tight joining together. The composite material comprises a first (1) decorative sheet of flexible material, a structural sheet (3) of malleable semirigid material and a second (5) decorative sheet of flexible material.

## Description

### FIELD OF THE INVENTION

The present invention, according to this descriptive memory, refers to the manufacture process of a multilayer composite material and the material made using said procedure, being said material used for the manufacture of different objects, such as decorative figures or decorative panels used as coating for any kind of surface such as coating panels for house floors, walls and/or ceilings.

### BACKGROUND OF THE INVENTION

Nowadays, there are known plenty of materials comprising a plurality of layers which are used for manufacturing different kinds of objects, such as decorative figures, or as decorative panels for coating.

Most decorative objects in the market consist of only one normally rigid body, and there is no moldable multilayer material that can be easily made up. To give the decorative object its final shape it will be necessary to make the constitutive material of said decorative object using quite expensive techniques and procedures.

The applicant does not know the existence of a multilayer composite material which is made using two external sheets of a flexible material and an internal sheet of a malleable semirigid material, used for manufacturing decorative objects such as decorative figures or coating panels.

Therefore, there has been detected a need to offer a multilayer composite material that can be shaped without complicated and expensive manufacturing processes.

This objective is reached using the invention as defined by claims 1 and 6, the dependent claims defining preferred embodiments of the invention.

### DESCRIPTION OF THE INVENTION

The object of the present invention is a procedure for manufacturing a multilayer composite material for decorative objects and the material obtained using said procedure.

The procedure comprises the following steps:
a) Placing a first decorative sheet of flexible material on a work surface
b) Applying a first layer of adhesive material on the facing surface of the first decorative sheet
c) Placing a structural sheet of malleable semirigid material on the first layer of adhesive material
d) Applying a second layer of adhesive material on the facing surface of the layer of moldable semirigid material
e) Placing a second decorative sheet of flexible material on the second layer of adhesive material
f) Exerting even pressure on the surface of the three sheets for a tight joining together

In this way, using the procedure and given the semirigid and malleable nature of the intermediate layer and the flexible nature of the external layers which adapt themselves to the shape of the intermediate layer, a multilayer composite material is obtained, being its greatest advantage that it can be easily made without complex forming procedures.

Besides the aforementioned steps, different forming steps can be carried out to obtain the final decorative object, comprising said forming steps, for example, cutting, bending, curving, embossing, molding, decorating steps or a combination of them.

Said steps can be performed either before the forming procedure of the assembly of composite material (joining of the sheets) or after the joining of the different sheets.

In the former case, the steps have to be carried out first, for example the cutting step for each of the sheets or for any one of them separately, and the forming procedure of the composite material assembly will be performed later.

In the latter case, the forming steps are carried out on the composite material assembly once the sheets have been joined together, obtaining firstly a raw sheet or panel of the composite material to carry on, from said material, to the cutting, bending, die-cutting, etc. steps.

The multilayer composite material obtained using the manufacturing procedure object of the present invention therefore comprises a first decorative sheet of flexible material, on top of which a structural sheet of malleable semirigid material is placed and on top of this sheet a second decorative sheet of flexible material is placed, being the sheets joined together by layers of the said adhesive material.

Optionally, the joining of the sheets could be achieved by sewing them together.

As for the material that constitutes both the first and second sheets of decorative material, it can be a fabric, fur and by-products, synthetic materials such as plastic materials or blends and combinations of them.

The material can comprise additional decorative sheets joined to the external face of the first and second decorative sheets, acting the first and second decorative sheets as a base for applying said additional decorative sheets.

### DESCRIPTION OF THE DRAWINGS

The following is a brief description of a series of drawings which can help better understand the invention and which expressly relate to embodiments of said invention presented as illustrative yet non-limiting examples of it.
Figure 1 shows a schematic sectional view of a part of the multilayer composite material object of the present invention.
Figure 2 shows a perspective view of one of the applications of the multilayer composite material object of the present invention and, more specifically, it refers to a stackable decorative container.

### DESCRIPTION OF AN EMBODIMENT

The main object of the present invention is a procedure for manufacturing a multilayer composite material for decorative objects, which comprises the following steps:
a) Placing a first decorative sheet 1 of flexible material on a work surface
b) Applying a first layer of adhesive material 2 on the facing surface of the first decorative sheet
c) Placing a structural sheet 3 of malleable semirigid material on the first layer of adhesive material
d) Applying a second layer of adhesive material 4 on the facing surface of the layer of moldable semirigid material
e) Placing a second decorative sheet 5 of flexible material on the second layer of adhesive material
f) Exerting even pressure on the surface of the three sheets for a tight joining together

The work surface can be, for example, a table on which the first sheet of decorative material 1 will be placed, later applying the adhesive layer 2, being the type of adhesive any kind of adhesive known compatible with the materials to be joined together, in this case a flexible material and a semirigid material.

As for the pressure exerting step, it can be performed exerting pressure manually or automatically, as long as even pressure is exerted along the entire surface of the sheets to be joined together.

To join together the sheets, they could additionally be sewed together, which could be combined with joining them with adhesive or could be used exclusively.

There can be two options as to the sheet forming. On the one hand, the forming can be made on each on the sheets separately before stacking them or putting them in place or it could be made after joining them together.

As an example we can mention a decorative figure with the shape of a form of nature, where, according to the first option presented, each one of the parts that form said form of nature are cut for each of the sheets with the necessary shape and the sheets are later joined for each one of the parts that form the decorative object, stacking the three layers (2 external sheets of decorative material and an internal sheet of semirigid material) and joining them together exerting some pressure.

A second option would be to carry out the forming operations once the "raw" multilayer material is obtained, that is to say, once a plate of material is obtained, and from said plate each one of the elements that constitute the decorative object are cut out, such as the parts that constitute the form of nature mentioned before.

Logically, the different elements obtained using the procedure mentioned can be joined together to form the decorative figures.

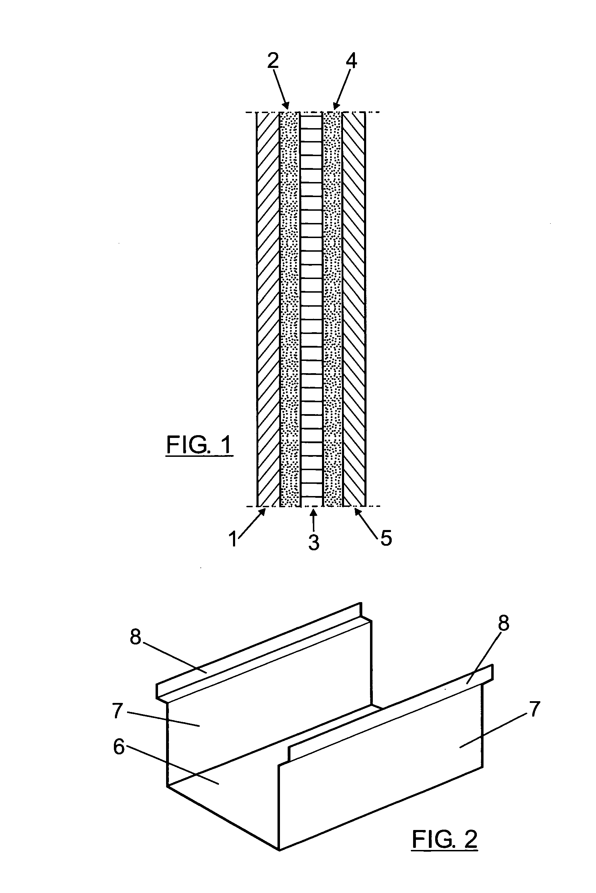

Figure 1 shows a schematic sectional view of the different sheets that constitute the multilayer material object of the present invention. Thus, for example, a first decorative sheet 1 of flexible material is set out to which, after applying a layer of adhesive 2, it is adhered a structural sheet 3 of malleable semirigid material, to which another layer of adhesive 4 is applied and on top of which a last decorative sheet 5 of flexible material is applied.

Given the nature of the use that the multilayer material object of the present invention will have, it will be necessary that the material of the first 1 and second 5 decorative sheets be flexible, being possibly even elastic so that it can be optimally adapted to the structural sheet 3, whose mission is mainly to be a framing to define the shape, mainly in 3 dimensions, of each one of the elements forming the decorative object.

Under the described conditions it will be desirable that the material of the decorative sheets be a fabric, fur or a synthetic laminar material, possibly having said materials a decorative appearance, and being it possible to use other materials of similar characteristics.

As for the material of the structural sheet, as it has been described before, it has to be semirigid and malleable so that it can be given the desired shape, depending its degree of rigidity and malleability on the kind of decorative object to be manufactured. For example, for decorative plates or panels used in wall or floor coatings it is desirable that the degree of rigidity be high enough since the finish of the coating will be better from the aesthetic point of view.

As regards the size of the structural sheet, it can be smaller than the size of the decorative sheets, without having to coincide with the shape of the decorative sheets either.

On the first 1 and second 5 decorative sheets additional decorative sheets could be placed, such as a sheet with a patterned design.

Figure 2 shows an example of the application of the multilayer composite material object of the present invention and it specifically refers to a stackable decorative container, which could be used, for example, as a shoe rack to be placed inside a closet.

The aforementioned container, in the present embodiment, which shall be in no case limiting, will be built from a panel made using the multilayer composite material object of the present invention which will be folded a couple of times to obtain a U-shaped section, defining a horizontal lower wall 6 and two vertical side walls 7.

The containers can be stacked one on top of the other, for which the side walls 7 have on their upper edge a widening to receive the lower wall 6 of the container placed on top of it.

## Claims

1. Procedure for manufacturing a multilayer composite material for decorative objects, **characterised by** comprising the following steps:
a. placing a first decorative sheet (1) of flexible material on a work surface,
b. applying a first layer of adhesive material (2) on the facing surface of the first decorative sheet (1),
c. placing a structural sheet (3) of malleable semirigid material on the first layer of adhesive material (2),
d. applying a second layer of adhesive material (4) on the facing surface of the layer of moldable semirigid material (3),
e. placing a second decorative sheet (5) of flexible material on the second layer of adhesive material (4),
f. exerting even pressure on the surface of the three sheets (1,3,5) for a tight joining together

2. Procedure according to claim 1, **characterized in that** additionally and before step "a" a forming step is carried out separately both of the first (1) and second (5) decorative sheets as well as the structural sheet (3), to give them a predefined shape according to a pattern shape.

3. Procedure according to claim 2, **characterized in that** the forming step can include a cutting, bending, curving, embossing, molding, decorating step or a combination of them.

4. Procedure according to claim 1, **characterized in that** additionally, after step "f" there is a forming step of the assembly constituted by the first (1) and second (5) decorative sheets as well as the structural sheet (3), to give them a predefined shape according to a pattern shape.

5. Procedure according to claim 4, **characterized in that** the forming step can include a cutting, bending, curving, embossing, molding, decorating step or a combination of them.

6. Multilayer composite material for decorative objects manufactured using a procedure according to claims 1 to 5, **characterized by** comprising a first (1) decorative sheet of flexible material, on top of which a structural sheet of malleable semirigid material (3) is placed and on top of this sheet a second decorative sheet (5) of flexible material is placed, being the sheets joined together by layers of adhesive material (2,4).

7. Multilayer composite material according to claim 6, **characterized in that** the flexible material that constitutes the first (1) and second (5) decorative sheets is one of the following: fabric, fur, synthetic materials or combinations of them.

8. Composite material according to any of the claims 6 and 7, **characterized by** comprising additional decorative sheets joined to the external face of the first (1) and second (5) decorative sheets.
